# EUROPEAN PATENT APPLICATION

(11) **EP 2 506 124 A1**
(43) Date of publication of application: **03.10.2012**
(21) Application number: 11009244.2
(22) Date of filing: 22.11.2011
(51) Int. Cl.: G06F 3/033, G06F 1/26

(54) **Power generator for wireless mouse**

(30) Priority: 28.03.2011 JP 2011069199
(71) Applicant: Linear Circuit Inc., Kanazawa-shi Ishikawa 9200363 (JP)
(72) Inventor: Ono, Hiroaki, Kanazawa-shi Ishikawa 9200363 (JP)
(74) Representative: Müller-Boré & Partner Patentanwälte

(57) **Abstract**

It is an object of the present invention to provide a power generator for a wireless mouse of sufficiently practical use, which includes a dynamo combined with a power storage member, the dynamo being rotated to be driven by a drive unit with use of physical force. A power generator for a wireless mouse is characterized by comprising a dynamo G and a capacitor C as a power storage member, the dynamo G and capacitor C the being built in a case of the mouse, the dynamo G being rotated to be driven from outside the case by a rotating wheel 21 as a manual drive unit with use of physical force via an acceleration mechanism 22.

## Description

### BACKGROUND OF THE INVENTION

### Field of the Invention

The present invention relates to a power generator for a wireless mouse that is used as an input device of a computer.

### Description of the Related Art

A wireless mouse (of any one of a ball type, an optical type using a light emitting diode, and a laser type using a laser diode; the same shall apply hereinafter) of a computer usually includes a built-in power supply battery. However, if the mouse is provided with a power generation function, there needs no troublesome battery replacement (for example, Japanese Unexamined Patent Publication No. 2005-346152).

A conventional power generator for a wireless mouse includes a wheel for power generation built in a case of the mouse, which is configured similarly to a wheel for scrolling a computer screen. When the power generation wheel is rotated with a finger, a power generation coil is rotated to generate electric power.

Because the power generation wheel is provided separately from the screen scrolling wheel, there is no risk of causing erroneous operations or affecting the operability of screen scrolling even in a case where the power generation wheel is rotated while the mouse is in use.

In the above conventional art, the power generation wheel is connected directly to the power generation coil and is simply rotated to be driven with a finger while the mouse is in use. Accordingly, the amount of the generated electric power is insufficient and thus the power generation wheel is of poor practical use.

### SUMMARY OF THE INVENTION

In view of the above problem of the conventional art, it is an object of the present invention to provide a power generator for a wireless mouse of sufficiently practical use, which includes a dynamo combined with a power storage member, the dynamo being rotated to be driven by a drive unit with use of physical force.

In accordance with an aspect of the present invention, a power generator for a wireless mouse, characterized by comprising a dynamo and a power storage member in which electric power generated by the dynamo is stored, the dynamo and the power storage member being built in a case of the mouse, and the dynamo being rotated to be driven from outside the case by a manual drive unit with use of physical force via an acceleration mechanism provided in the case.

The drive unit is preferably configured as a rotating wheel which has an outer periphery pressed and frictioned against a flat plane to drive the dynamo. The rotating wheel preferably has a tire attached around the outer periphery. The outer periphery of the rotating wheel is preferably partially exposed outward from an opening which is provided in a flat portion of the case.

The drive unit is preferably configured as a foldable rotating handle which is mounted onto the case. The rotating handle is preferably located in a retreated position of being folded integrally into the case and in a used position of being opened outward from the case so as to be rotated. The rotating handle is preferably provided with a knob which is in parallel with a rotation axis of the rotating handle in the used position.

In the configuration according to the present invention, the dynamo is rotated to be driven from outside the case of the mouse by the drive unit, which drives with use of physical force of a user, via the acceleration mechanism. Therefore, the present invention achieves generation of sufficient electric power much more than the electric power generated by the conventional power generator which is simply rotated with a finger. The drive unit is not rotated while the mouse is in use. Accordingly, the electric power generated by the dynamo is stored in the power storage member such as a capacitor or a rechargeable battery, and is supplied to an electronic circuit of the mouse. The acceleration mechanism increases the rotation speed of the drive unit. The accelerated rotation is transmitted to the dynamo, which is thus rotated at high speed. Improved therefore is the efficiency of power generation by the dynamo. Applicable as the acceleration mechanism may be a gear mechanism or a rotation transmission mechanism that includes a chain, a belt, or the like. In the present invention, there may be also built in the case of the mouse any arbitrary necessary member other than the dynamo and the power storage member.

In the case where the drive unit is configured as the rotating wheel which has the outer periphery to be pressed and frictioned against a flat plane to drive the dynamo, the rotating wheel can be rotated by repetitive linear motion of the mouse with use of physical force. Accordingly, the rotating wheel can be rotated significantly easily. The flat plane herein has an arbitrary flat surface as on a top plate of a desk or a table. When the entire mouse is held with a single hand and the mouse is linearly moved in the rotation direction of the rotating wheel with the outer periphery being pressed against the flat plane, the rotating wheel is frictioned against the flat plane and is rotated, so that the dynamo can be rotated to be driven.

The rotating wheel having the tire attached around the outer periphery is advantageous because such a rotating wheel is less likely to slip on the flat plane and is easily rotated. The tire is preferably made of an antifrictional material having a large coefficient of sliding friction, such as a rubber material of appropriate elasticity.

In the case where the outer periphery of the rotating wheel is partially exposed outward from the opening which is provided in the flat portion of the case, the mouse is held so as to allow the flat portion to be substantially in parallel with the flat plane and to allow the outer periphery of the rotating wheel to be pressed against the flat plane, and the mouse in this state is linearly moved in the rotation direction of the rotating wheel. Accordingly, the dynamo in the case can be rotated to be driven. This flat portion can be formed at an arbitrary position on the case of the mouse, other than the bottom face of the mouse. The mouse can be easily held in an appropriate posture with a single hand particularly in a case where the flat portion is formed at a front end or a rear end of the mouse.

In the case where the drive unit is configured as the rotating handle, the entire mouse is held with a single hand and the rotating handle is rotated with use of physical force of the other hand so as to rotate and drive the dynamo. The rotating handle has only to be externally mounted onto the case of the mouse, which achieves simplification of the entire structure.

Because the rotating handle can be located in the retreated position of being folded integrally into the case, the rotating handle does not disturb the operation of the mouse in use. In the case where the rotating handle is provided with a knob that is disposed in parallel with the rotation axis of the rotating handle in the used position, further improvement is achieved to the operability during the rotation of the rotating handle. In this case, the knob is mounted to the rotating handle so as to be relatively rotatable about a fixed shaft that is in parallel with the rotation axis.

### BRIEF DESCRIPTION OF THE DRAWINGS

Fig. 1 is a schematic view showing a configuration of a main part of a power generator for a wireless mouse according to the present invention;
Fig. 2 is a schematic plan view of the power generator according to the present invention;
Fig. 3 is a view illustrating a state where the power generator is in use;
Fig. 4 is a view of an electrical system of the power generator according to the present invention;
Figs. 5A and 5B are perspective views each illustrating a power generator for a wireless mouse according to a different embodiment of the present invention;
Fig. 6 is a plan view showing the operation of the power generator according to the different embodiment of the present invention;
Fig. 7 is an exploded perspective view showing a main part of the power generator according to the different embodiment of the present invention;
Fig. 8 is a side view showing the operation of a power generator for a wireless mouse according to a still different embodiment of the present invention;
Fig. 9 is a bottom view of the power generator according to the still different embodiment of the present invention; and
Fig. 10 is a schematic plan view of the power generator according to the still different embodiment of the present invention.

### DETAILED DESCRIPTION OF THE PREFERRED EMBODIMENTS

Described below are embodiments of the present invention with reference to the drawings.

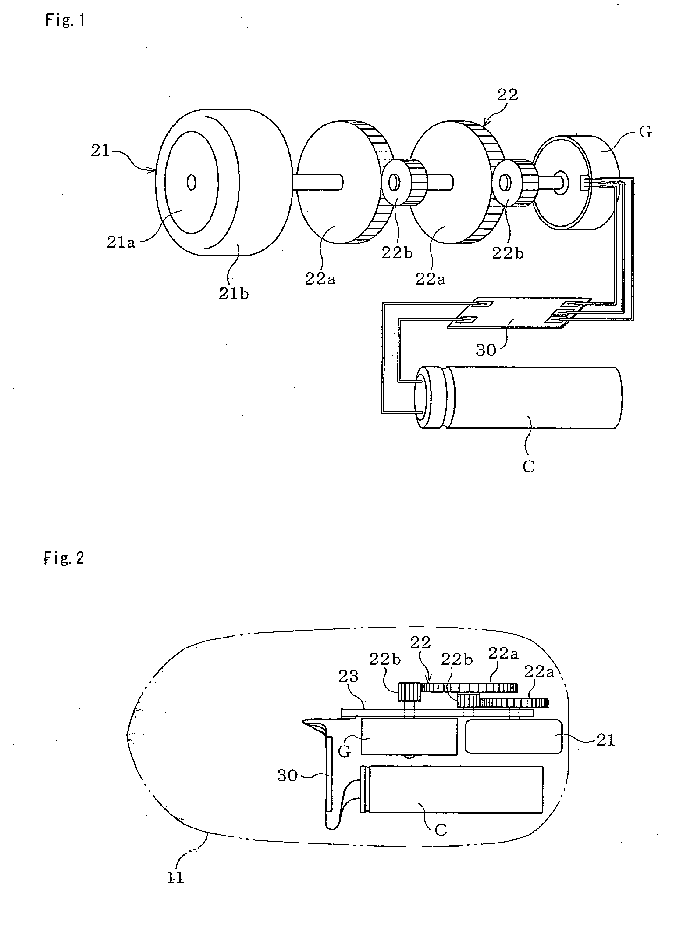

A power generator for a wireless mouse includes a dynamo G and a capacitor C functioning as a power storage member, both of which are built in a case 11 of a mouse (Figs. 1 and 2).

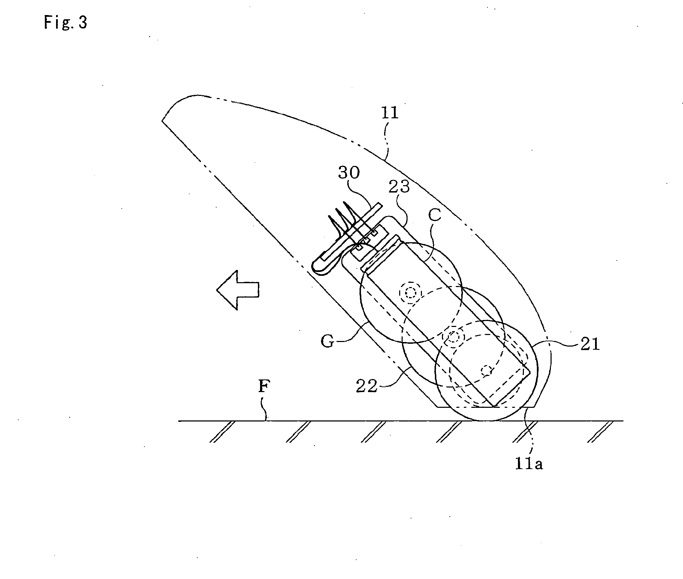

The dynamo G is coupled to a rotating wheel 21 that functions as a manual drive unit. The rotating wheel 21 is configured by a hub 21a and a tire 21b that is attached around an outer periphery of the hub 21a. There is installed between the rotating wheel 21 and the dynamo G an acceleration mechanism 22 that includes large and small gears 22a and 22b, ... combined with each other in order. The rotating wheel 21, the acceleration mechanism 22, and the dynamo G are assembled onto a common support plate 23 that is provided in the case 11 (Figs. 2 and 3). The rotating wheel 21 has an outer periphery that is partially exposed outward from an opening (not shown) formed in an oblique flat portion 11a at a rear end of the case 11.

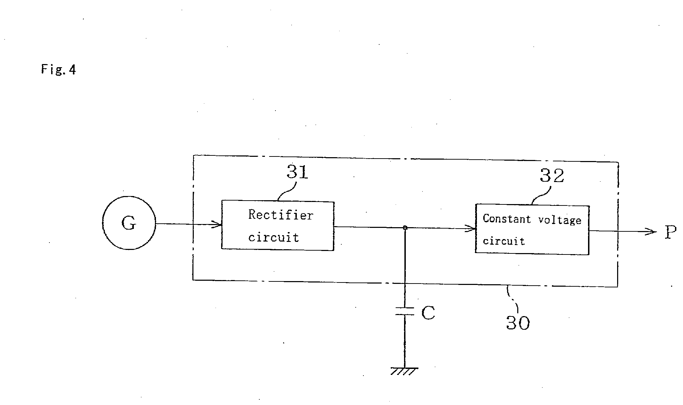

The dynamo G has an output terminal connected to an electronic circuit (not shown) of the mouse by way of a rectifier circuit 31 and a constant voltage circuit 32 that are mounted on a substrate 30 (Figs. 1 and 4). The capacitor C is connected between the rectifier circuit 31 and the constant voltage circuit 32 so as to be branched therefrom.

The dynamo G is rotated to be driven upon rotation of the rotating wheel 21. More specifically, the case 11 of the mouse is held with a single hand so as to allow the flat portion 11a of the case 11 to be substantially in parallel with an appropriate flat plane F (Fig. 3) and the entire mouse is linearly moved (along an arrow indicated in this figure) in the rotation direction of the rotating wheel 21 while the rotating wheel 21 is being pressed against the flat plane F. The rotating wheel 21 can be then rotated with use of physical force, so that the dynamo G can be rotated to be driven via the acceleration mechanism 22. The electric power generated by the dynamo G is transmitted through the rectifier circuit 31 and is stored in the capacitor C (Fig. 4). Upon consumption of the stored electric power, it is transmitted through the constant voltage circuit 32 and is supplied as a DC power supply voltage P to the electronic circuit in the mouse. This power generation with use of the rotating wheel 21 can be repeated for a plurality of times in succession.

In the configuration described above, there is preferably provided on the case 11 with an indicator that indicates the state of charge of the capacitor C, so as to appropriately determine whether or not storage of electric power is required with use of the dynamo G. The capacitor C may be replaced with a rechargeable battery. The rotating wheel 21 may be formed in a spherical shape or a semispherical shape instead of the circular disk shape as shown in the figures.

### Other embodiments

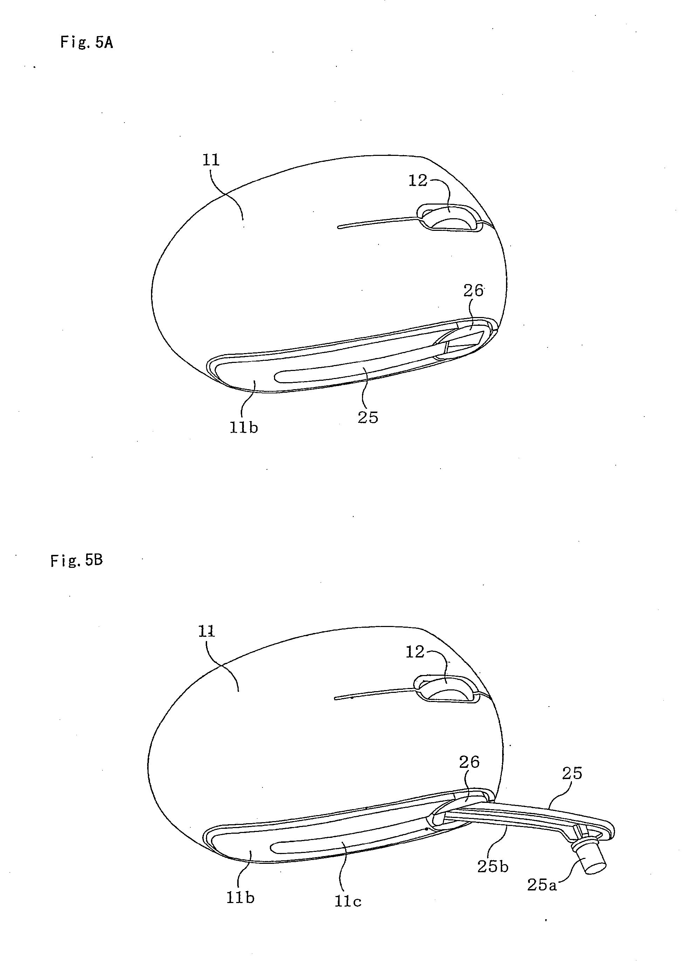

The drive unit for rotating to drive the dynamo G may be configured alternatively as a foldable rotating handle 25 that is mounted into a side face of the case 11 (Figs. 5A and 5B). Figs. 5A and 5B are perspective views showing the rotating handle 25 in a retreated position and the rotating handle 25 in a used position, respectively.

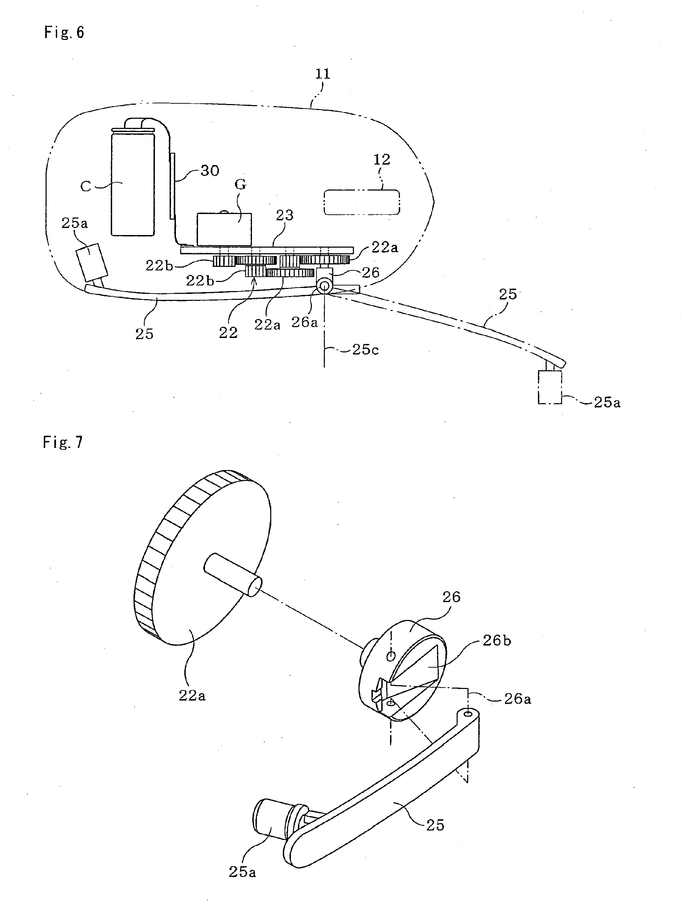

The rotating handle 25 is coupled to a shaft of a closest gear 22a in the acceleration mechanism 22 with a bracket 26 interposed therebetween (Figs. 6 and 7). The rotating handle 25 is curved into a shape identical with the outer shape of the side face of the case 11, and is swingably mounted to the case 11 by a hinge pin 26a provided on the bracket 26. The rotating handle 25 can be located in the retreated position (in Fig. 5A and solid lines in and Fig. 6) of being folded integrally into the side face of the case 11, and in the used position (in Fig. 5B and alternate long and short dash lines in Fig. 6) of being opened outward from the case 11.

The rotating handle 25 is provided at a tip end thereof with an inward knob 25a, and is also provided on an inner face thereof with a reinforcing rib 25b. The knob 25a is mounted so as to be relatively rotatable about a fixed shaft that stands toward the inner face of the rotating handle 25. The knob 25a is accommodated in the case 11 when the rotating handle 25 is in the retreated position, and is located so as to be in parallel with a rotation axis 25c of the rotating handle 25, in other words, so as to be perpendicularly to the side face of the case 11, when the rotating handle 25 is in the used position (Fig. 6). The bracket 26 is provided with an oblique face 26b that defines an open angle of the rotating handle 25 in the used position (Fig. 7). Further, the case 11 is provided on the side face with a guide member 11b having a slit 11c in which the rotating handle 25 is accommodated in the retreated position so as not to affect the appearance (Figs. 5A and 5B). The case 11 is also mounted on an upper front face thereof with a wheel 12 used for screen scrolling.

When the rotating handle 25 is opened into the used position (the alternate long and short dash lines in Fig. 6), the case 11 of the mouse is held with a single hand, and the rotating handle 25 is rotated about the rotation axis 25c by the knob 25a with use of physical force of the other hand, the dynamo G is rotated to be driven via the acceleration mechanism 22 and electric power can be thus generated. The rotating handle 25 folded in the retreated position does not disturb the operation of the mouse.

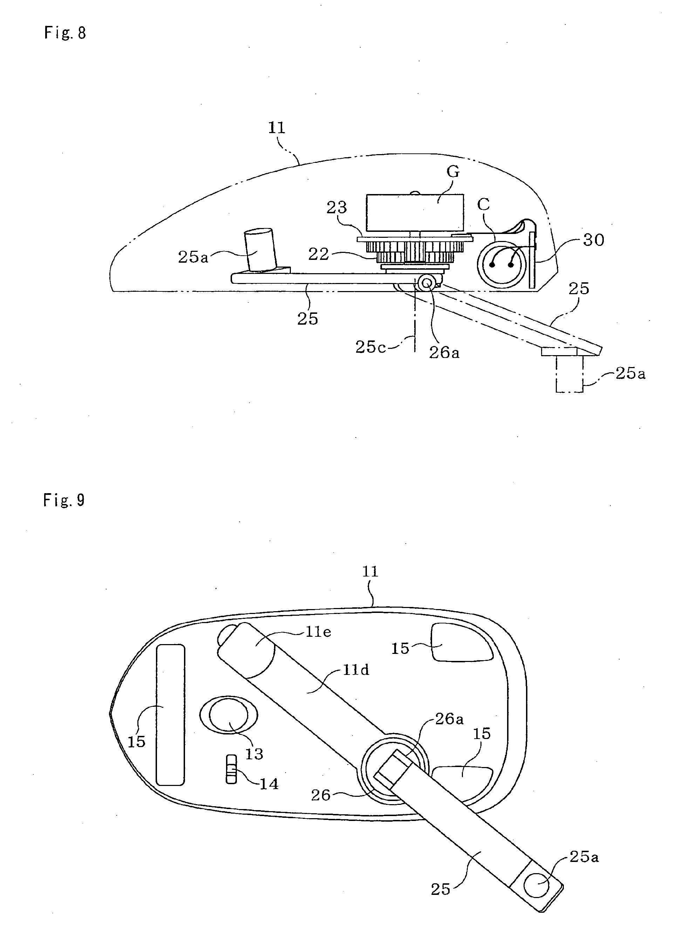

Alternatively, the foldable rotating handle 25 may be provided at a bottom face of the case 11 (Figs. 8 and 9).

The case 11 is provided on the bottom face with an optical source unit for an optical mouse, a transmissive window 13 for a reader unit, a power switch 14, as well as sliding sheets 15, 15, ... that reduce frictional resistance generated by the motion of the mouse. The case 11 also has in the bottom face a groove 11d that accommodates the rotating handle 25 in the retreated position and is provided with a guide hole 11e in which the knob 25a is accommodated.

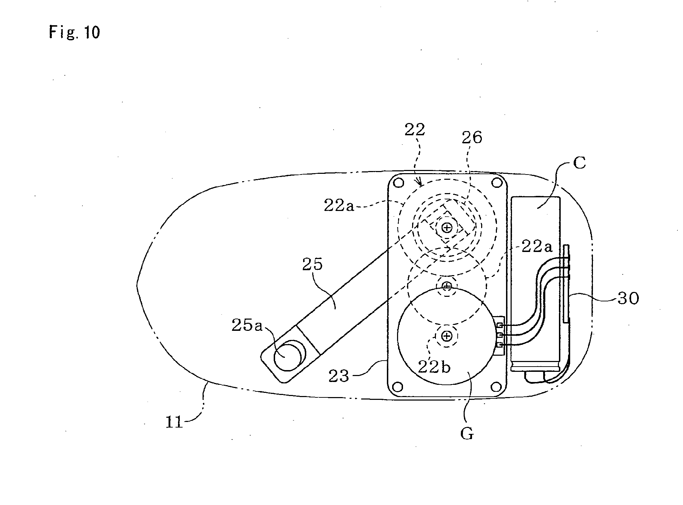

The rotating handle 25 has a proximal end that is coupled to an end of the shaft of the closest gear 22a in the acceleration mechanism 22 by way of the bracket 26 provided with the hinge pin 26a (Figs. 8 and 10). In Fig. 8, solid lines and alternate long and short dash lines indicate the rotating handle 25 in the retreated position and the rotating handle 25 the used position, respectively. Fig. 9 illustrates the rotating handle 25 in the used position, and Fig. 10 illustrates the rotating handle 25 in the retreated position, respectively.

When the rotating handle 25 is opened into the used position (the alternate long and short dash lines in Fig. 8) and is rotated about the rotation axis 25c, the dynamo G is rotated to be driven via the acceleration mechanism 22 and can generate electric power. The rotating handle 25 in the used position can be rotated with use of physical force by rotating the knob 25a with a single hand while the case 11 is held with the other hand. The knob 25a in this state is in parallel with the rotation axis 25c, thereby being perpendicular to the bottom face of the case 11.

In the configuration described above, the acceleration mechanism 22 may include only one set of the large and small gears 22a and 22b combined with each other, or may include two or more sets thereof coupled to form multiple gears. Still alternatively, the acceleration mechanism 22 may be configured as a gear mechanism of an arbitrary type in which gears other than the large and small gears 22a and 22b are provided. Further alternatively, the acceleration mechanism 22 may be configured as a rotation transmission mechanism that includes a chain or a belt.

The present invention is widely and preferably applicable to a wireless mouse of an arbitrary type which performs necessary transmission of data with a computer with no cable being provided therebetween.

### DESCRIPTION OF SYMBOLS

- G: dynamo
- C: capacitor
- F: flat plane
- 11: case
- 11a: flat portion
- 21: rotating wheel
- 21b: tire
- 22: acceleration mechanism
- 25: rotating handle
- 25a: knob
- 25c: rotation axis

## Claims

1. A power generator for a wireless mouse, **characterized by** comprising:
a dynamo;
a power storage member in which electric power generated by the dynamo is stored,
the dynamo and the power storage member being built in a case of the mouse, and
the dynamo being rotated to be driven from outside the case by a manual drive unit with use of physical force via an acceleration mechanism provided in the case.

2. The power generator for a wireless mouse according to claim 1, **characterized in that**
the drive unit is configured as a rotating wheel which has an outer periphery pressed and frictioned against a flat plane to drive the dynamo.

3. The power generator for a wireless mouse according to claim 2, **characterized in that**
the rotating wheel has a tire attached around the outer periphery.

4. The power generator for a wireless mouse according to claim 2 or 3, **characterized in that**
the outer periphery of the rotating wheel is partially exposed outward from an opening which is provided in a flat portion of the case.

5. The power generator for a wireless mouse according to claim 1, **characterized in that**
the drive unit is configured as a foldable rotating handle which is mounted onto the case.

6. The power generator for a wireless mouse according to claim 5, **characterized in that**
the rotating handle is located in a retreated position of being folded integrally into the case and in a used position of being opened outward from the case so as to be rotated.

7. The power generator for a wireless mouse according to claim 6, **characterized in that**
the rotating handle is provided with a knob which is in parallel with a rotation axis of the rotating handle in the used position.
